# EUROPEAN PATENT SPECIFICATION

(11) **EP 3 854 611 B1**
(45) Date of publication and mention of the grant of the patent: **07.06.2023**
(21) Application number: 21152836.9
(22) Date of filing: 21.01.2021
(51) Int. Cl.: B60C 11/12, B60C 11/03, B60C 11/04, B60C 11/13

(54) **LOW-NOISE AND HIGH-WET-SKIDDING-RESISTANCE TIRE**
GERÄUSCHARMER UND HOCHNASSRUTSCHFESTER REIFEN
PNEU PEU BRUYANT ET À HAUTE RÉSISTANCE AU GLISSEMENT EN CAS D'HUMIDITÉ

(30) Priority: 23.01.2020 CN 202010075983; 23.01.2020 CN 202020145159 U; 19.01.2021 CN 202120141572 U; 19.01.2021 CN 202110071416
(43) Date of publication of application: 28.07.2021
(73) Proprietor: Aeolus Tyre Co., Ltd., 454003 Jiaozuo Henan (CN)
(72) Inventor: ZHOU, Pengfei, JIAOZUO, Henan 454003 (CN); LI, Zhao, JIAOZUO, Henan 454003 (CN); FAN, Junwei, JIAOZUO, Henan 454003 (CN); LI, Guorui, JIAOZUO, Henan 454003 (CN); REN, Bingjie, JIAOZUO, Henan 454003 (CN); HE, Changwei, JIAOZUO, Henan 454003 (CN); ZHENG, Yongliang, JIAOZUO, Henan 454003 (CN)
(74) Representative: Cabinet Beau de Loménie

(56) References cited:
- EP-A1- 3 501 852
- EP-A1- 3 513 992
- WO-A1-2015/094829
- CN-A- 103 101 405
- DE-A1-102018 219 148
- JP-A- 2002 036 820
- JP-A- 2008 030 622

## Description

### FIELD OF TECHNOLOGY

The present invention relates to tires, and in particular, to a low-noise and high-wet-skidding-resistance tire.

### BACKGROUND

With the continuous increase of vehicles and increasing requirements of humans for vehicle safety and comfort, various countries in the world have begun to issue restrictive access standards for the tire industry. In 2009, European Union issued the latest EC661/2009 Driving Certification Requirements of General Safety of European Automobiles and EC1222/2009 Tire Labels Related to Fuel Efficiency and Other Parameters, which set specific requirements for tire rolling resistance, wet road surface gripping performance, and road passing noise. It is clearly stated that tire label requirements for tire gripping performance levels and noise levels on wet road surfaces were implemented on July 1, 2012. Regulations similar thereto have been implemented in Japan. In recent years, China has also been preparing to introduce similar labeling laws and regulations.

With the development of social economy, concepts of "comfort", "safety", and "environmental protection" have enjoyed popular support, and higher requirements have been put forward for the skidding and noise resistance of vehicle tires. The skidding and noise resistance of tires is closely related to a pattern structure and flowing of a fluid medium in a pattern groove, and a contradiction that is difficult to reconcile is presented: On the one hand, increasing a volume of the pattern groove reduces a volume of a pattern block, which is beneficial to improve a water drainage capability of a pattern, thereby improving wet-skidding resistance of a tire. On the other hand, increasing a space volume of the pattern groove increases tire noise. Due to existence of such a contradiction, the current tire pattern structure design method is incapable to attend to everything at once. Therefore, it is very necessary to explore and study new tire pattern design theories and methods to resolve the contradiction between tire noise and wet-skidding resistance.

As research continuously deepens, in order to improve the overall performance of tires, scientific and technical workers for tires are no longer limited to theoretical methods of designing traditional patterns, and have begun to explore use of biological information for tire pattern designs. Hankook Tire Co., Ltd. has developed an asymmetrical pattern that mimics the Phoenix Totem, which can effectively drain water accumulated when the tire is running, minimize a "hydroplaning phenomenon", and adopt a soft and smooth transition process, to effectively reduce resonance sound. "Blasting Foam" put forward by Goodyear Tire & Rubber Company is to make hemispherical protrusions and depressions, which can interlock with each other, between pattern grooves of a tire, to suppress deformation of a pattern block, thereby improving the ground gripping performance and reducing tire noise. Toyo Tires proposed a concept of a silent wall, that is, serrated grooves are densely distributed on a sidewall of a pattern groove of a tire, and turbulence of the serrated grooves reduces tire noise. Although the Chinese public patents 201310560419.8 and 201210342761.6 use bionic non-smooth structures to improve tire noise and hydroplaning performance, such a bionic pattern design cannot ensure that the gripping performance of a tire is not sacrificed after is tire is worn, because a grounding area of such a pattern does not increase from beginning to end. The original patents (the Chinese open patents 201310560419.8 and 201210342761.6) add a bionic cutter groove on a surface of a pattern, which has a short action life in a depth direction. Based on this patent, a scaly design is added to a wall of a pattern groove instead of a surface of a pattern. However, Toyo tires use dense serrated grooves, and the noise is still large. Therefore, a better noise reduction effect cannot be generated. With the implementation of European Union labeling laws and regulations, the promotion of green tires, and the emphasis on comprehensive tire performance, a tire with an innovative design concept is required to meet the market needs.

JP 2008/030622, JP 2002/036820, WO 2015/094829, DE 10 2018 219148, EP 3 513 992, CN 103 101 405 and EP 3 501 852 are also known and disclose other tire structures.

Based on the present invention, a fluid passage capability of a pattern groove is improved and noise generated by a pattern is reduced by using a scale-like and non-smooth wall of the pattern groove.

### SUMMARY

To resolve the above problems, the present invention provides a low-noise and high-wet-skidding-resistance tire according to claim 1. A scale-shaped concave-convex structure is disposed on a side wall of a pattern groove, especially a longitudinal pattern groove, which can interfere with fluid noise generated in the pattern groove of the tire, especially the longitudinal pattern groove, thereby reducing noise, improving the water passing performance of the pattern groove, especially the longitudinal pattern groove, on skidding roads, and providing vehicles with a sufficiently high hydroplaning speed and lower tire noise.

A low-noise and high-wet-skidding-resistance tire, comprising a tread pattern, wherein the tread pattern comprises a pattern groove, and a scale-shaped concave-convex structure is disposed on each of two side walls of a pattern groove.

According to the invention, the pattern groove whose two side walls each are provided with the scale-shaped concave-convex structure is a longitudinal pattern groove, and a circumferential scale-shaped concave-convex structure is disposed on each of two side walls of the longitudinal pattern groove.

Optionally, an inner bottom surface of the longitudinal pattern groove is provided with stone discharging platforms, the stone discharging platforms are connected by using a reinforcing rib, and the stone discharging platforms in each longitudinal pattern groove are connected to form a wavy line structure.

Optionally, the tread pattern further comprises a circumferential pattern rib, the longitudinal pattern groove is circumferentially disposed along the tire, and the circumferential pattern rib and the longitudinal pattern groove are disposed at intervals; the pattern rib is provided with a uniform arc-shaped cutter groove, and two ends of the arc-shaped cutter groove are connected to an adjacent longitudinal pattern groove.

Optionally, all adjacent arc-shaped cutter grooves are connected to form a smooth arc.

Optionally, the arc-shaped cutter groove is formed by inlaying steel sheets with different depths on the pattern ribs.

According to the invention, a depth of the longitudinal pattern groove is 5 mm to 18 mm, and a width is 3 mm to 14 mm; a position of the scale-shaped concave-convex structure on the side wall of the longitudinal pattern groove is from depth 0 to depth d of the longitudinal pattern groove, the depth of the longitudinal pattern groove is D, and a d/D ratio is 50% to 85%.

Optionally, each scale of the scale-shaped concave-convex structure is located on an ellipse, a long-axis diameter L of the ellipse is 5 mm to 8 mm, a short-axis diameter H is 3 mm to 5 mm, and a value range of H/L is between 60% and 65%; the scale-shaped concave-convex structure is formed by laterally moving scales in a same oblique row to the left or right in sequence by S, 2S, 3S, 4S, 5S..., and nS, n is an integer greater than or equal to 1, and s is less than L; among adjacent scales in the same oblique row, one scale may horizontally move by a distance A and vertically move by a distance B to obtain another scale; a value of A is 4 mm to 6 mm, and a value of B is 1.5 mm to 3.5 mm, a value range of B/A is between 35% to 60%, A<L, and B<H; or each scale of the scale-shaped concave-convex structure is located on a circle, a diameter R of the circle is 2.5 mm to 3.5 mm, the scale-shaped concave-convex structure is formed by laterally moving scales in a same oblique row to the left or right in sequence by S, 2S, 3S, 4S, 5S..., and nS, n is an integer greater than or equal to 1, and s is less than 2R; among adjacent scales in the same oblique row, one scale may horizontally move by a distance A and vertically move by a distance B to obtain another scale; a value of A is 4 mm to 6 mm, a value of B is 1.5 mm to 3.5 mm, A<2R, and B<2R.

Optionally, A≤L/2, B≤H/2, S≤L/2, and an arc-shaped edge of the scale structure on a contour of the ellipse has a same thickness; or A≤R, B≤R, S≤R, and an arc-shaped edge of the scale structure on a contour of a circle has a same thickness; the angle formed between the upper surface of the scale and the lower surface of the scale is 1-20° .

Optionally, the angle formed between the upper surface of the scale and the lower surface of the scale is 15° .

Compared with the prior art, based on the present invention, the scale-shaped concave-convex structure is added to the wall of the pattern groove, thereby disturbing the flowing characteristics of an external airflow in the pattern groove, and reducing noise generated through movement of a gas inside the pattern groove, especially the longitudinal pattern groove. In addition, a design of a scale-shaped concave-convex groove increases pressure between the wall of the pattern groove and the fluid, and increases a flow rate of a fluid, thereby improving the drainage performance of the product, at the same time, it is conducive to demolding.

The present invention can be applied to all grooved tire designs. Grooves can be horizontal grooves, longitudinal grooves, diagonal grooves, or arc grooves. Without sacrificing the overall performance of an original tire such as rolling resistance, tire noise is reduced, the wet-skidding-resistance of the tire is improved, and an appearance is beautiful and generous.

### BRIEF DESCRIPTION OF THE DRAWINGS

FIG. 1 is a schematic structural diagram of a tread pattern of a tire according to the present invention; In the figure, a and b correspond to the scale-shaped concave-convex structure on the side wall a' , b' respectively; c and d correspond to the scale-shaped concave-convex structure on the side wall c' , d' respectively; e and f correspond to the scale-shaped concave-convex structure on the side wall e' , f' respectively; g and h correspond to the scale-shaped concave-convex structure on the side wall g' , h' respectively;
FIG. 2 is a schematic section view of a longitudinal pattern groove of a tire in the place of a-a' in FIG 1;

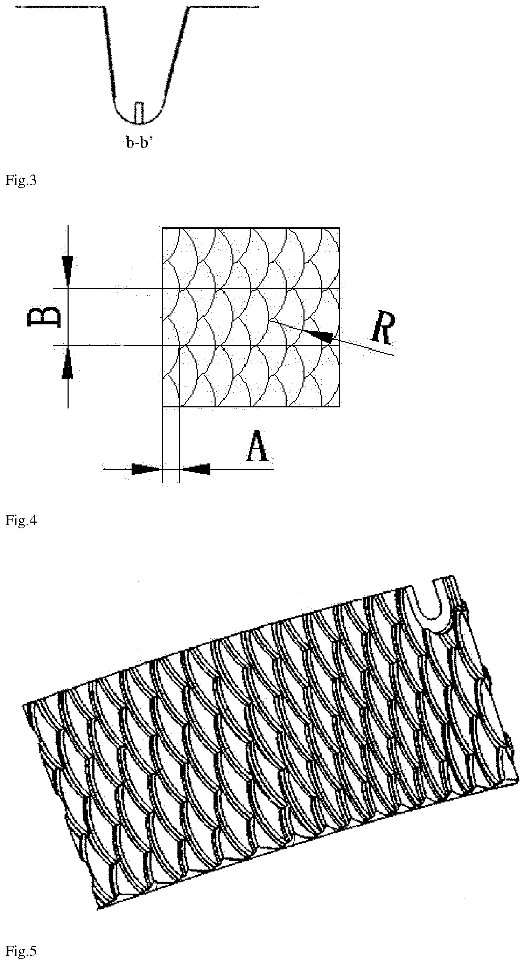

FIG. 3 is a schematic sectional view of a longitudinal pattern groove of a tire in the place of b-b' in Figure 1;
FIG. 4 is a schematic diagram of a scale-shaped concave-convex structure on a side wall of a longitudinal pattern groove;
FIG. 5 is a schematic diagram of a three-dimensional structure of a scale-shaped concave-convex structure;
FIG. 6 is a schematic diagram of setting parameters of a scale-shaped concave-convex structure;
FIG. 7 is a setting diagram of a model of analyzing noise on a wall surface of a longitudinal pattern groove;
FIG. 8 is a diagram of a calculation model and boundary conditions of a longitudinal pattern groove;
FIG. 9 is a curve diagram of noise spectra of a single pattern groove in four solutions;
FIG. 10 is a schematic diagram of the upper surface of one scale-shaped concavo-convex structure;
FIG. 11 is a cross-sectional view of line E-F in FIG. 10;
Fig. 12 is the first cross-sectional view of line H-J in Fig. 10;
Fig. 13 is the second cross-sectional view of line H-J in Fig. 10;
Figure 14 is the third cross-sectional view of line H-J in Fig. 10.

### DESCRIPTION OF THE EMBODIMENTS

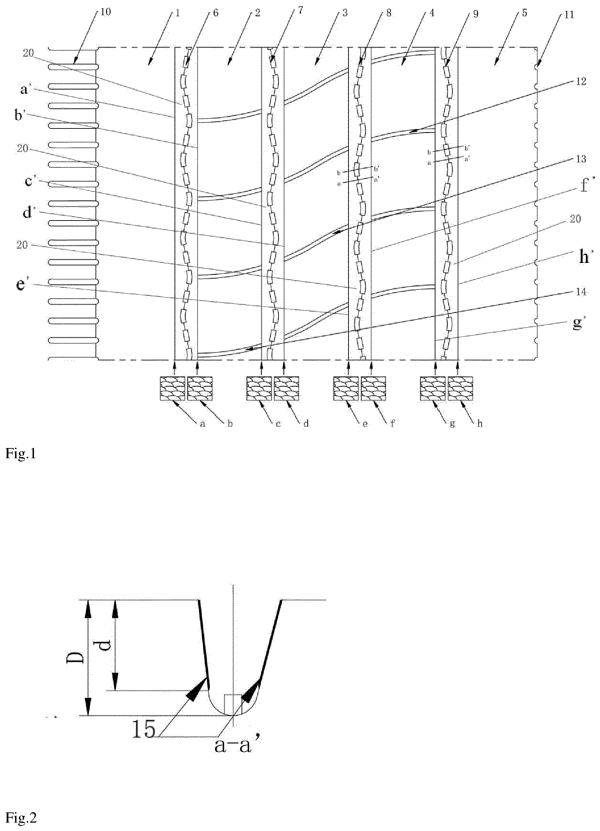

As shown in FIG. 1, FIG. 6 and FIG. 10 to FIG. 11, a low-noise and high-wet-skidding-resistance tire is provided, including a tread pattern. The tread pattern includes a pattern groove. A scale-shaped concave-convex structure is disposed on each of two side walls of the pattern groove.

The tread pattern includes a longitudinal pattern groove 20, and a scale-shaped concave-convex structure 15 circumferentially arranged on a side wall of the tire is disposed on each of two side walls of the longitudinal pattern groove. Alternatively, a pattern groove whose two side walls each are provided with scale-shaped concave-convex structures is a longitudinal pattern groove, when the longitudinal grooves are arranged along the circumferential direction of the tire, because the scale-shaped concave-convex structure is arranged along the circumferential direction of the longitudinal grooves, then a circumferential scale-shaped concave-convex structure is disposed on each of two side walls of the longitudinal pattern groove. As shown in Figure 1, the two side walls of the four circumferentially arranged longitudinal grooves are side walls a' , b' , c' , d' , e' , f' , g' , h' , in order from left to right, side walls a' , b' , c' , d' , e' , f' , g' , h' corresponding to scale-shaped concave-convex structures on the sidewalls are a, b, c, d, e, f, g, h.

An inner bottom surface of the longitudinal pattern groove is provided with stone discharging platforms, the stone discharging platforms are connected by using reinforcing ribs, and the stone discharging platforms in each longitudinal pattern groove are connected to form a wavy line structure. The store discharging platform enhances stone discharging performance at the bottom of the longitudinal pattern groove, and tear resistance of the bottom of the groove of the tire. In addition, a design of the stone discharging platform can ensure that the product has the good fluid passing performance after being grounded, and improve the anti-hydroplaning performance of the product.

The tread pattern further includes a circumferential pattern rib, the longitudinal pattern groove is circumferentially disposed along the tire, and the circumferential pattern rib and the longitudinal pattern groove are disposed at intervals. The pattern rib is equivalent to a pattern block.

The pattern rib is provided with a uniform arc-shaped cutter groove, and two ends of the arc-shaped cutter groove are connected to an adjacent longitudinal pattern groove. The arc-shaped cutter groove can produce good braking force and good wet-skidding-resistance; and improve the heat dissipation performance of the tire, thereby improving the durability of the tire. In addition, a design of the arc-shaped cutter groove reduces the rigidity of the pattern rib and facilitates vehicle turning. Finally, the arc-shaped cutter groove is designed to appropriately divide the pattern rib to improve the aesthetic performance of the tire.

All adjacent arc-shaped cutter grooves are connected to form a smooth arc.

During the tire molding process, steel sheets with different depths on the mold are embedded on the pattern ribs. After the tire is molded and demolded, the pattern ribs form arc-shaped cutter grooves.

The longitudinal pattern groove has an inverted flared cross section, that is, openings gradually become smaller from an upper opening to a bottom opening.

A depth of the longitudinal pattern groove is 5 mm to 18 mm, and a width is 3 mm to 14 mm; a position of the scale-shaped concave-convex structure on the side wall of the longitudinal pattern groove is from depth 0 to depth d of the longitudinal pattern groove, the depth of the longitudinal pattern groove is D, and a ratio of d/D is 50% to 85%.

Scales of the scale-shaped concave-convex structure are arranged in a certain regularity. For example, the scale-shaped concave-convex structure is formed by laterally moving scales in a same oblique row to the left or right in sequence by S, 2S, 3S, 4S, 5S..., and nS (n is an integer greater than or equal to 1, and s is less than L, L is the long-axis diameter of the ellipse), and corresponding scales moving by a distance of S form a cross. Among adjacent scales in the same oblique row, one scale may horizontally move by a distance A and vertically move by a distance B to obtain another scale, and two adjacent scales form a cross.

A shape of the scale may be as follows:
Any ellipse is used as a reference, and this ellipse is subjected to lateral displacement ±A and longitudinal displacement ±B to form four ellipses. In the end, at all junctions of the ellipses, in a longitudinal direction, an upper or lower side of each ellipse is uniformly retained; in a horizontal direction, a left or right side of each ellipse is uniformly retained, thereby forming a mutually connected scale-shaped structure. A retained part of each ellipse is a scale structure. In the formed scale-shaped structure, a horizontal spacing between adjacent scales located in a same horizontal row is 2A, and a vertical spacing between adjacent scales in a same vertical column is 2B. A long-axis diameter L of the ellipse is 5 mm to 8 mm, a short-axis diameter H is 3 mm to 5 mm, and a value range of H/L is between 60% and 65%. In this case, a value of A is 4 mm to 6 mm, and a value of B is 1.5 mm to 3.5 mm, a value range of B/A is between 35% and 60%, A<L, B<H, and S is smaller than L. Preferably, A≤L/2, B≤H/2, and S≤L/2. In this case, the scale is an elliptical scale structure.

Each scale structure gradually becomes thinner from an arc edge on a contour of the ellipse to an edge not on the contour of the ellipse.

The arc edge of the scale structure has a same thickness on the contour of the ellipse.

A shape of the scale may be as follows:
Any circle is used as a reference, and this circle is subjected to lateral displacement ±A and longitudinal displacement ±B to form four circles. In the end, at all junctions of the circles, in a longitudinal direction, an upper or lower side of each circle is uniformly retained; in a horizontal direction, a left or right side of the circle is uniformly retained, thereby forming a mutually connected scale-shaped structure. A retained part of each circle is a scale structure. In the formed scale-shaped structure, a horizontal spacing between adjacent scales located in a same horizontal row is 2A, and a vertical spacing between adjacent scales in a same vertical column is 2B. A radius R of the circle is 2.5 mm to 3.5 mm, a value of A is 3.5 mm to 5.5 mm, a value of B is 1.2 mm to 1.8 mm, a value range of B/A is between 35% and 60%, A<2R, B<2R, and s is less than 2R. Preferably, A≤R, B≤R, S≤R. In this case, the scale is a circular scale structure. Here, the circle is a special ellipse, L=2R.

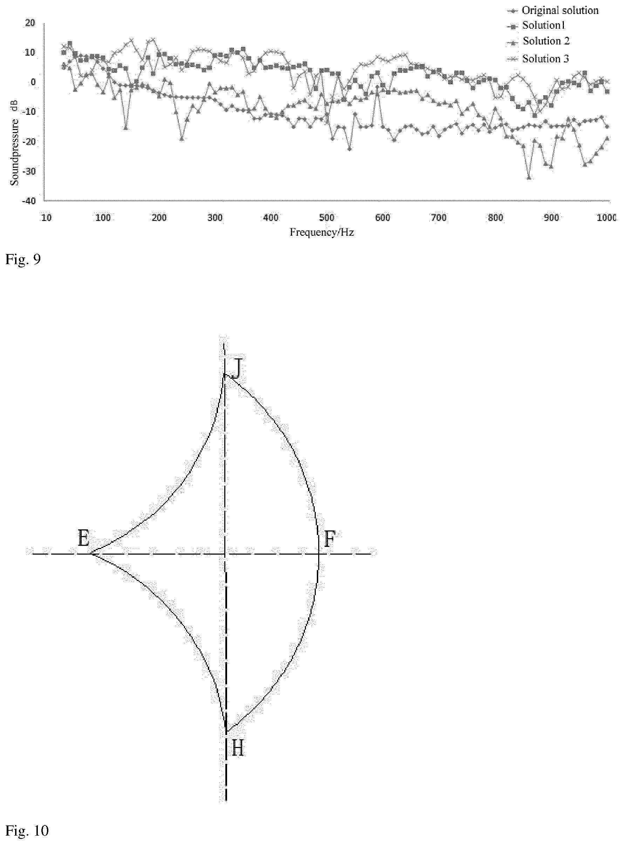

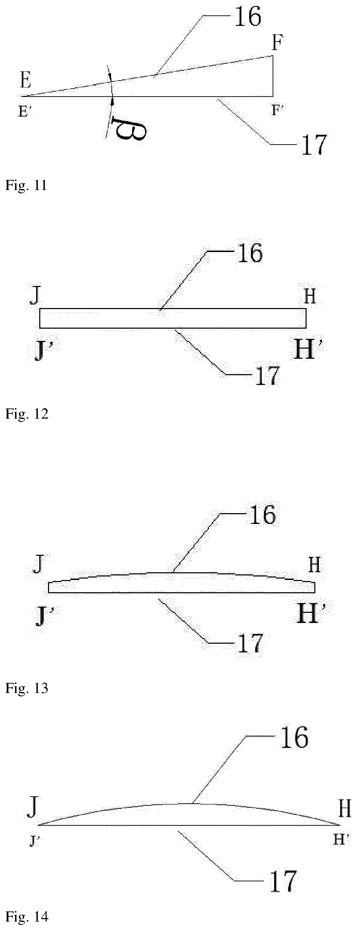

Each scale structure gradually becomes thinner from an arc edge on a contour of the ellipse to an edge not on the contour of the ellipse. A schematic diagram of the upper surface of the scale-shaped structure can be shown in Figure 10. In Figure 10, the end points are H, J and E, and F is the center point of the arc HJ; the cross-sectional view of the line E F in Figure 10 is shown in Figure 11, and the upper surface of the cross-sectional view is the line E F, the lower surface is the line E', F', and the end point E' coincides with E. In the cross-sectional view, the angle F can be rounded; the angle β formed between the upper surface 16 of the scale and the lower surface 17 of the scale is 1- 20° , preferably, the angle β formed between the upper surface 16 of the scale and the lower surface 17 of the scale may be 15° . The cross-sectional view of the line HJ in Fig. 10 is shown in Fig. 12. The upper surface of the cross-sectional view is line J H, and the lower surface is line J' , H' . In cross-sectional view 12, the thickness of each scale-shaped structure is equal from the middle to the two sides; in the cross-sectional view, the angles J and H can be rounded angles.

Each scale-shaped structure can also be shell-shaped, and the thickness of each scale-shaped structure gradually becomes thinner from the middle to the two sides, as shown in Figure 13 and Figure 14. The cross-sectional view of the line HJ on Figure 10 is as shown in Figure 13 or Figure 14. As shown, in the cross-sectional view of FIG. 13, the upper surface is the arc JH, and the lower surface is the line J' and H' . In the cross-sectional view 13, the angle J and H can be rounded angle. In the cross-sectional view of Fig. 14, the upper surface is the arc JH, and the lower surface is the line segments J' and H'. At this time, the endpoint J' coincides with J, and the endpoint H' coincides with H.

The arc edge of the scale structure has the same thickness on the contour of the circle.

Only an external shape of the scale of the longitudinal pattern groove is similar to the scale. However, no scale can be opened, and each scale is fixedly connected to or integrated with an ambient scale, or the bottom of any part of each scale is integrated with the side wall of the longitudinal pattern groove.

For details, as shown in FIG. 1, the tread pattern includes a circumferential pattern rib 1, a longitudinal pattern groove 20, a pattern rib 2, a longitudinal pattern groove 20, a pattern rib 3, a longitudinal pattern groove 20, and a pattern rib 4, a longitudinal pattern groove 20, and a pattern rib 5 that are disposed at intervals. A stone discharging platform 6, a stone discharging platform 7, a stone discharging platform 8, and a stone discharging platform 9 are respectively disposed on the longitudinal pattern grooves 20.

The pattern rib 2, the pattern rib 3, and the pattern rib 4 are respectively provided with an arc-shaped cutter groove 12, an arc-shaped cutter groove 13, and an arc-shaped cutter groove 14. The arc-shaped cutter groove 12, the arc-shaped cutter groove 13, and the arc-shaped cutter groove 14 are connected to form a smooth arc.

The tread pattern further includes a shoulder pattern, which includes the transverse shoulder cutter grooves evenly disposed on both sides of the shoulders. The transverse shoulder cutter groove is a closed cutter groove. A width of the closed cutter groove is less than 8 mm, and a depth is less than 5 mm.

The transverse shoulder cutter groove is added to the shoulder, and the closed cutter groove have the width less than 8 mm and the depth less than 5 mm, to dissipate heat, thereby ensuring that the product has relatively good rolling resistance and resistance to deformity and wear.

The scale-shaped convex-concave structure in the present application mainly refers to that the outer surface of the side wall of the groove provided with the scale-shaped convex-concave structure is scale-shaped, and the inside of the side wall is solid.

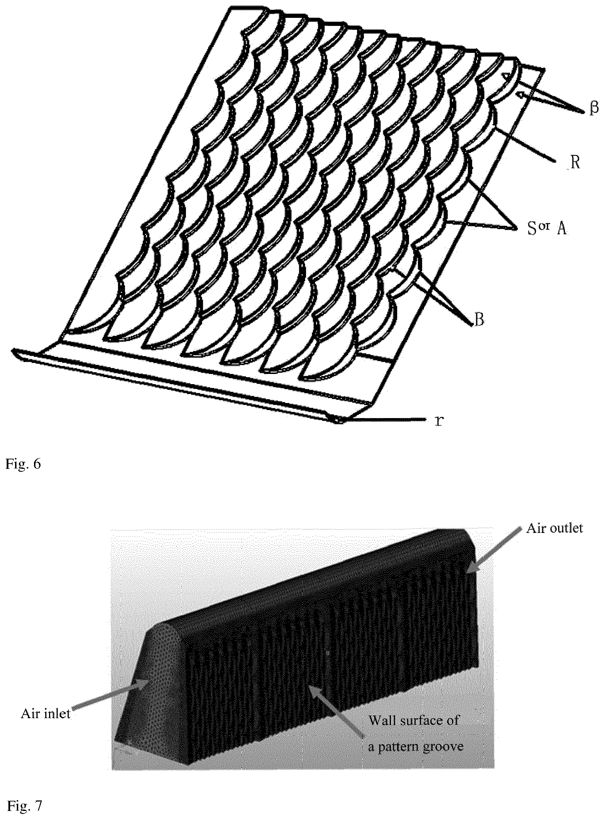

Test:
1. The scale is a circular scale structure. Sizes of different scale-shaped concave-convex structures are shown in Table 1 below, and a schematic diagram of setting parameters of a scale-shaped concave-convex structure is shown in FIG. 6.

**Table 1 Parameters in different solutions**

| | Arc radius/mm, namely R | Distance between centers of adjacent arcs in a same row/mm, namely S or A | Longitudinal distance between centers in two adjacent rows/mm, namely B | Included angle between an upper surface of a scale and a wall surface of a pattern groove/°, namely β | Arc radius at the bottom of the pattern groove/mm, namely r |
|---|---|---|---|---|---|
| Solution 1 | 2 | 3 | 1 | 15 | 3.5 |
| Solution 2 | 3 | 4.5 | 1.5 | 15 | 3.5 |
| Solution 3 | 4 | 6 | 2 | 15 | 3.5 |

In solution 4, the scale-shaped concave-convex structure is not disposed on the pattern groove. A radius of the bottom of the pattern groove is 3.5 mm as in solution 1, solution 2, and solution 3. Conditions in the other four solutions are the same. Here, the angle β° between the upper surface of the scale and the wall surface of the groove is the angle formed between the upper surface of the scale and the lower surface of the scale.

### 2. Pattern noise analysis method

### 2.1 Mesh model

In combination with a length of a grounding impression of a truck tire being about 200 mm, pattern grooves in the four different solutions are processed based on 200 mm, to reflect a length of the tire when the tire is grounded. When the four solutions are meshed, a size near a side wall of a longitudinal pattern groove is set to 0.25 mm, and a size near a middle area of the longitudinal pattern groove is set to 0.75 mm. A total number of meshes for the four solutions is about 2 million.

### 2.2 Boundary condition

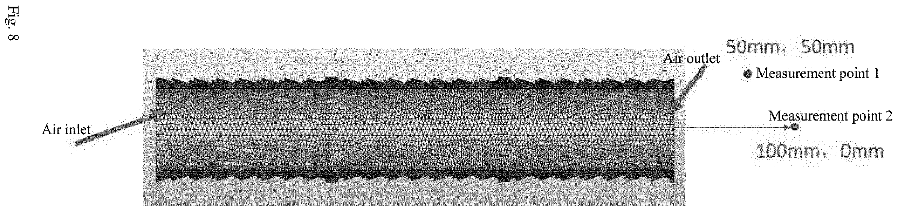

Three parts that are an air inlet, an air outlet, and a wall surface of the longitudinal pattern groove (including the wall surface of the longitudinal pattern groove and a road surface) are separately disposed for a model. Two sound pressure measurement points are set at a distance from the outlet. The settings are shown in FIG. 7. An air inlet velocity is set to 80 km/h, and noise in different solutions is calculated through large eddy simulation and FH-W acoustic analogy. A calculation model and boundary conditions of the longitudinal pattern groove that are obtained are shown in FIG. 8.

### 3. Result analysis

FIG. 9 shows a curve of noise spectra of a single pattern groove in four solutions. Since a main purpose of this analysis is to explore impact of a non-smooth scale design of a wall of the pattern groove on noise, a noise value of a simulation result is relatively small.

It can be seen from FIG. 9 that solution 2 shows a noise reduction effect, while solutions 1 and 3 show no expected noise reduction effect, which to a certain extent reflects that if non-smooth scale processing is performed on the wall of the pattern groove, a size of the scale has a relatively good parameter.

## Claims

1. A low-noise and high-wet-skidding-resistance tire, comprising a tread pattern,
wherein the tread pattern comprises a longitudinal pattern groove (20), arranged along the circumferential direction of the tire, and
wherein a circumferential scale-shaped concave-convex structure (a-b) is disposed on each of two side walls (a'-b') of the longitudinal pattern groove (20),
**characterized in that** a depth (D) of the longitudinal pattern groove (20) is comprised between 5 mm and 18 mm, and a width thereof is comprised between 3 mm and 14 mm; and
**in that** a position of the scale-shaped concave-convex structure (15) on the side wall (a') of the longitudinal pattern groove (20) is provided from depth 0 to depth d of the longitudinal pattern groove (20), where the depth of the longitudinal pattern groove is D, and a d/D ratio is comprised between 50% and 85%.

2. The low-noise and high-wet-skidding-resistance tire according to claim 1, wherein an inner bottom surface of the longitudinal pattern groove (20) is provided with stone discharging platforms (6),
wherein the stone discharging platforms (6) are connected by using a reinforcing rib, and
wherein the stone discharging platforms (6) in each longitudinal pattern groove (20) are connected to form a wavy line structure.

3. The low-noise and high-wet-skidding-resistance tire according to claim 1 or 2, wherein the tread pattern further comprises a circumferential pattern rib (2),
wherein the circumferential pattern rib (2) and the longitudinal pattern groove (20) are disposed at intervals;
wherein the circumferential pattern rib (2) is provided with a uniform arc-shaped cutter groove (14), and
wherein two ends of the arc-shaped cutter groove (14) are connected to an adjacent longitudinal pattern groove (20).

4. The low-noise and high-wet-skidding-resistance tire according to claim 3, wherein all adjacent arc-shaped cutter grooves (12, 13, 14) are connected to form a smooth arc.

5. The low-noise and high-wet-skidding-resistance tire according to claim 3 or 4, wherein the arc-shaped cutter groove (12) is formed by inlaying steel sheets with different depths on the circumferential pattern ribs (2).

6. The low-noise and high-wet-skidding-resistance tire according to any one of claims 1 to 5, wherein each scale of the scale-shaped concave-convex structure (a) is located on an ellipse, a long-axis diameter L of the ellipse being comprised between 5 mm and 8 mm, a short-axis diameter H thereof being comprised between 3 mm and 5 mm, and a value range of H/L is comprised between 60% and 65%;
wherein the scales of the scale-shaped concave-convex structure (a) are arranged in a certain regularity, such that
- the scale-shaped concave-convex structure (a) is formed by laterally moving scales in a same oblique row to either direction in sequence by S, 2S, 3S, 4S, 5S..., and nS, where n is an integer greater than or equal to 1, and S is less than L;
- among adjacent scales in the same oblique row, one scale is horizontally shifted by a distance A and vertically shifted by a distance B to obtain another scale, where a value of A is comprised between 4 mm and 6 mm, a value of B is comprised between 1.5 mm and 3.5 mm, and a value range of B/A is comprised between 35% to 60%, with A<L and B<H; and
- a horizontal spacing between adjacent scales located in a same horizontal row is 2A, and a vertical spacing between adjacent scales in a same vertical column is 2B.

7. The low-noise and high-wet-skidding-resistance tire according to any one of claims 1 to 5, wherein each scale of the scale-shaped concave-convex structure (a) is located on a circle, a diameter R of the circle being comprised between 2.5 mm and 3.5 mm,
wherein the scales of the scale-shaped concave-convex structure (a) are arranged in a certain regularity, such that
- the scale-shaped concave-convex structure (a) is formed by laterally moving scales in a same oblique row either direction in sequence by S, 2S, 3S, 4S, 5S..., and nS, where n is an integer greater than or equal to 1, and S is less than 2R;
- among adjacent scales in the same oblique row, one scale is horizontally shifted by a distance A and vertically shifted by a distance B to obtain another scale, where a value of A is comprised between 4 mm and 6 mm, a value of B is comprised between 1.5 mm and 3.5 mm, with A<2R, and B<2R; and
- a horizontal spacing between adjacent scales located in a same horizontal row is 2A, and a vertical spacing between adjacent scales in a same vertical column is 2B.

8. The low-noise and high-wet-skidding-resistance tire according to claim 6, wherein A≤L/2, B≤H/2, and S≤L/2,
wherein an arc-shaped edge of the scale structure on a contour of the ellipse has a same thickness; and
wherein the angle (β) formed between the upper surface of the scale and the lower surface of the scale is 1-20°.

9. The low-noise and high-wet-skidding-resistance tire according to claim 7, wherein A≤R, B≤R, and S≤R,
wherein an arc-shaped edge of the scale structure on a contour of a circle has a same thickness; and
wherein the angle (β) formed between the upper surface of the scale and the lower surface of the scale is 1-20°.

10. The low-noise and high-wet-skidding-resistance tire according to claim 8 or 9, wherein the angle (β) formed between the upper surface of the scale and the lower surface of the scale is 15°.

## Patentansprüche

1. Geräuscharmer und hochnassrutschfester Reifen, der ein Laufflächenmuster umfasst,
wobei das Laufflächenmuster eine Musterlängsrille (20) umfasst, die entlang der Umfangsrichtung des Reifens angeordnet ist, und
wobei auf jeder von zwei Seitenwänden (a'-b') der Musterlängsrille (20) eine schuppenförmige Konkav-Konvex-Umfangsstruktur (a-b) angebracht ist,
**dadurch gekennzeichnet, dass** eine Tiefe (D) der Musterlängsrille (20) zwischen 5 mm und 18 mm umfasst ist, und eine Breite davon zwischen 3 mm und 14 mm umfasst ist; und
dadurch, dass eine Position der schuppenförmigen Konkav-Konvex-Struktur (15) auf der Seitenwand (a') der Musterlängsrille (20) von einer Tiefe 0 bis zu einer Tiefe d der Musterlängsrille (20) bereitgestellt ist, wo die Tiefe der Musterlängsrille D ist, und ein d-D-Verhältnis zwischen 50% und 85% umfasst ist.

2. Geräuscharmer und hochnassrutschfester Reifen nach Anspruch 1, wobei eine innere Bodenfläche der Musterlängsrille (20) mit Steinauswurfplattformen (6) versehen ist,
wobei die Steinauswurfplattformen (6) unter Verwendung einer Verstärkungsrippe verbunden sind, und
wobei die Steinauswurfplattformen (6) in jeder Musterlängsrille (20) verbunden sind, um eine Wellenlinienstruktur zu bilden.

3. Geräuscharmer und hochnassrutschfester Reifen nach Anspruch 1 oder 2, wobei das Laufflächenmuster ferner eine Umfangsmusterrippe (2) umfasst,
wobei die Umfangsmusterrippe (2) und die Musterlängsrille (20) in Intervallen angebracht sind;
wobei die Umfangsmusterrippe (2) mit einer einheitlich bogenförmigen Schneidnut (14) versehen ist, und
wobei zwei Enden der bogenförmigen Schneidnut (14) mit einer benachbarten Musterlängsrille (20) verbunden sind.

4. Geräuscharmer und hochnassrutschfester Reifen nach Anspruch 3, wobei alle benachbarten bogenförmigen Schneidnuten (12, 13, 14) verbunden sind, um einen glatten Bogen zu bilden.

5. Geräuscharmer und hochnassrutschfester Reifen nach Anspruch 3 oder 4, wobei die bogenförmige Schneidnut (12) durch Einlegen von Stahlblechen mit unterschiedlichen Tiefen auf die Umfangsmusterrippen (2) gebildet wird.

6. Geräuscharmer und hochnassrutschfester Reifen nach einem der Ansprüche 1 bis 5, wobei sich jede Schuppe der schuppenförmigen Konkav-Konvex-Struktur (a) auf einer Ellipse befindet, wobei ein Langachsendurchmesser L der Ellipse zwischen 5 mm und 8 mm umfasst ist, wobei ein Kurzachsendurchmesser H davon zwischen 3 mm und 5 mm umfasst ist, und ein Wertebereich von H/L zwischen 60% und 65% umfasst ist;
wobei die Schuppen der schuppenförmigen Konkav-Konvex-Struktur (a) mit einer gewissen Regelmäßigkeit angeordnet sind, derart, dass
- die schuppenförmige Konkav-Konvex-Struktur (a) durch seitliches Bewegen von Schuppen in einer selben schrägen Zeile in eine Richtung in Folge um S, 2S, 3S, 4S, 5S..., und nS gebildet wird, wo n eine Ganzzahl größer als oder gleich 1 ist, und S kleiner als L ist;
- von benachbarten Schuppen in der selben schrägen Zeile eine Schuppe um einen Abstand A horizontal verschoben und um einen Abstand B vertikal verschoben ist, um eine weitere Schuppe zu erhalten, wo ein Wert von A zwischen 4 mm und 6 mm umfasst ist, ein Wert von B zwischen 1,5 mm und 3,5 mm umfasst ist, und ein Wertebereich von B/A zwischen 35% und 60% umfasst ist, wo A<L und B<H; und
- ein horizontaler Zwischenraum zwischen benachbarten Schuppen, die sich in einer selben horizontalen Zeile befinden, 2A ist, und ein vertikaler Zwischenraum zwischen benachbarten Schuppen in einer vertikalen Spalte 2B ist.

7. Geräuscharmer und hochnassrutschfester Reifen nach einem der Ansprüche 1 bis 5, wobei sich jede Schuppe der schuppenförmigen Konkav-Konvex-Struktur (a) auf einem Kreis befindet, wobei ein Durchmesser R des Kreises zwischen 2,5 mm und 3,5 mm umfasst ist,
wobei die Schuppen der schuppenförmigen Konkav-Konvex-Struktur (a) mit einer gewissen Regelmäßigkeit angeordnet sind, derart, dass
- die schuppenförmige Konkav-Konvex-Struktur (a) durch seitliches Bewegen von Schuppen in einer selben schrägen Zeile in eine Richtung in Folge um S, 2S, 3S, 4S, 5S..., und nS gebildet wird, wo n eine Ganzzahl größer als oder gleich 1 ist und S kleiner als 2R ist;
- von benachbarten Schuppen in der selben schrägen Zeile eine Schuppe um einen Abstand A horizontal verschoben, und um einen Abstand B vertikal verschoben ist, um eine weitere Schuppe zu erhalten, wo ein Wert von A zwischen 4 mm und 6 mm umfasst ist, ein Wert von B zwischen 1,5 mm und 3,5 mm umfasst ist, wo A<2R und B<2R; und
- ein horizontaler Zwischenraum zwischen benachbarten Schuppen, die sich in einer selben horizontalen Zeile befinden, 2A ist, und ein vertikaler Zwischenraum zwischen benachbarten Schuppen in einer vertikalen Spalte 2B ist.

8. Geräuscharmer und hochnassrutschfester Reifen nach Anspruch 6, wobei A≤L/2, B≤H/2 und S≤L/2,
wobei eine bogenförmige Kante der Schuppenstruktur an einer Kontur der Ellipse eine selbe Dicke aufweist; und
wobei der Winkel (β), der zwischen der Oberfläche der Schuppe und der Unterfläche der Schuppe gebildet ist, 1-20° beträgt.

9. Geräuscharmer und hochnassrutschfester Reifen nach Anspruch 7, wobei A≤R, B≤R und S≤R,
wobei eine bogenförmige Kante der Schuppenstruktur an einer Kontur eines Kreises eine selbe Dicke aufweist; und
wobei der Winkel (β), der zwischen der Oberfläche der Schuppe und der Unterfläche der Schuppe gebildet ist, 1-20° beträgt.

10. Geräuscharmer und hochnassrutschfester Reifen nach Anspruch 8 oder 9, wobei der Winkel (β), der zwischen der Oberfläche der Schuppe und der Unterfläche der Schuppe gebildet ist, 15° beträgt.

## Revendications

1. Pneu peu bruyant et à haute résistance au glissement en cas d'humidité, comprenant un motif de bande de roulement,
dans lequel le motif de bande de roulement comprend une rainure de motif longitudinale (20) agencée le long de la direction circonférentielle du pneu, et
dans lequel une structure concavo-convexe circonférentielle en forme d'écaille (a-b) est disposée sur chacune des deux parois latérales (a'-b') de la rainure de motif longitudinale (20),
**caractérisé en ce qu'**une profondeur (D) de la rainure de motif longitudinale (20) est comprise entre 5 mm et 18 mm et sa largeur est comprise entre 3 mm et 14 mm ; et
**en ce qu'**une position de la structure concavo-convexe en forme d'écaille (15) sur la paroi latérale (a') de la rainure de motif longitudinale (20) est prévue d'une profondeur 0 à la profondeur d de la rainure de motif longitudinale (20), où la profondeur de la rainure de motif longitudinale est D, et un rapport d/D est compris entre 50% et 85%.

2. Pneu peu bruyant et à haute résistance au glissement en cas d'humidité selon la revendication 1, dans lequel une surface interne de fond de la rainure de motif longitudinale (20) est prévue avec des plateformes de décharge de pierres (6),
dans lequel les plateformes de décharge de pierres (6) sont raccordées en utilisant une nervure de renforcement, et
dans lequel les plateformes de décharge de pierres (6) dans chaque rainure de motif longitudinale (20) sont raccordées pour former une structure à ligne ondulée.

3. Pneu peu bruyant et à haute résistance au glissement en cas d'humidité selon la revendication 1 ou 2, dans lequel le motif de bande de roulement comprend en outre une nervure de motif circonférentielle (2),
dans lequel la nervure de motif circonférentielle (2) et la rainure de motif longitudinale (20) sont disposées à intervalles ;
dans lequel la nervure de motif circonférentielle (2) est prévue avec une rainure de coupe en forme d'arc uniforme (14), et
dans lequel deux extrémités de la rainure de coupe en forme d'arc (14) sont raccordées à une rainure de motif longitudinale (20).

4. Pneu peu bruyant et à haute résistance au glissement en cas d'humidité selon la revendication 3, dans lequel toutes les rainures de coupe en forme d'arc (12, 13, 14) adjacentes sont raccordées pour former un arc lisse.

5. Pneu peu bruyant et à haute résistance au glissement en cas d'humidité selon la revendication 3 ou 4, dans lequel la rainure de coupe en forme d'arc (12) est formée en incrustant des feuilles d'acier à différentes profondeurs sur les nervures de motif circonférentielles (2).

6. Pneu peu bruyant et à haute résistance au glissement en cas d'humidité selon l'une quelconque des revendications 1 à 5, dans lequel chaque écaille de la structure concavo-convexe en forme d'écaille (a) est positionnée sur une ellipse, un diamètre d'axe long L de l'ellipse étant compris entre 5 mm et 8 mm, son diamètre d'axe court H étant compris entre 3 mm et 5 mm, et une plage de valeurs de H/L est comprise entre 60% et 65% ;
dans lequel les écailles de la structure concavo-convexe en forme d'écaille (a) sont agencées avec une certaine régularité, de sorte que :
la structure concavo-convexe en forme d'écaille (a) est formée en déplaçant latéralement des écailles dans une même rangée oblique dans les deux directions en séquence par S, 2S, 3S, 4S, 5S ..., et nS où n est un nombre entier supérieur ou égal à 1 et S est inférieur à L ;
parmi les écailles adjacentes dans la même rangée oblique, une écaille est décalée horizontalement d'une distance A et décalée verticalement d'une distance B pour obtenir une autre écaille, où une valeur de A est comprise entre 4 mm et 6 mm, une valeur de B est comprise entre 1,5 mm et 3,5 mm, et une plage de valeurs de B/A est comprise entre 35% et 60%, avec A < L et B < H ; et
un espacement horizontal entre les écailles adjacentes positionnées dans une même rangée horizontale est 2A, et un espacement vertical entre les écailles adjacentes dans une même colonne verticale est 2B.

7. Pneu peu bruyant et à haute résistance au glissement en cas d'humidité selon l'une quelconque des revendications 1 à 5, dans lequel chaque écaille de la structure concavo-convexe en forme d'écaille (a) est positionnée sur un cercle, un diamètre R du cercle étant compris entre 2,5 mm et 3,5 mm,
dans lequel les écailles de la structure concavo-convexe en forme d'écaille (a) sont agencées avec une certaine régularité, de sorte que :
la structure concavo-convexe en forme d'écaille (a) est formée en déplaçant latéralement des écailles dans une même rangée oblique dans les deux directions en séquence par S, 2S, 3S, 4S, 5S ..., et nS, où n est un nombre entier supérieur ou égal à 1, et S est inférieur à 2R ;
parmi les écailles adjacentes dans la même rangée oblique, une écaille est décalée horizontalement d'une distance A et décalée verticalement d'une distance B pour obtenir une autre écaille, où une valeur de A est comprise entre 4 mm et 6 mm, une valeur de B est comprise entre 1,5 mm et 3,5 mm, avec A < 2R et B < 2R ; et
un espacement horizontal entre des écailles adjacentes positionnées dans une même rangée horizontale est 2A, et un espacement vertical entre des écailles adjacentes dans une même colonne verticale est 2B.

8. Pneu peu bruyant et à haute résistance au glissement en cas d'humidité selon la revendication 6, dans lequel A ≤ L/2, B ≤ H/2 et S ≤ L/2,
dans lequel un bord en forme d'arc de la structure d'écaille sur un contour de l'ellipse a une même épaisseur ; et
dans lequel l'angle (β) formé entre la surface supérieure de l'écaille et la surface inférieure de l'écaille est 1-20°.

9. Pneu peu bruyant et à haute résistance au glissement en cas d'humidité selon la revendication 7, dans lequel A ≤ R, B ≤ R et S ≤ R,
dans lequel un bord en forme d'arc de la structure d'écaille sur un contour d'un cercle a une même épaisseur ; et
dans lequel l'angle (β) formé entre la surface supérieure de l'écaille et la surface inférieure de l'écaille est 1-20°.

10. Pneu peu bruyant et à haute résistance au glissement en cas d'humidité selon la revendication 8 ou 9, dans lequel l'angle (β) formé entre la surface supérieure de l'écaille et la surface inférieure de l'écaille est de 15°.
